# EUROPEAN PATENT APPLICATION

(11) **EP 3 091 623 A1**
(43) Date of publication of application: **09.11.2016**
(21) Application number: 16167179.7
(22) Date of filing: 27.04.2016
(51) Int. Cl.: H02G 3/06, H02G 3/08

(54) **INSTALLATION BOX WITH CONNECTION FOR FLEX TUBES OF TWO DIAMETERS**

(30) Priority: 05.05.2015 SE 1550573
(71) Applicant: Schneider Electric Industries SAS, 92500 Rueil-Malmaison (FR)
(72) Inventor: Pettersson, Jonas, 61167 Nyköping (SE)
(74) Representative: Groth & Co. KB

(57) **Abstract**

Installation box (10) for the installation of electrical cables, which box (10) is provided with a bottom (11) and at least one side wall (12) which is connected to the bottom and extends up toward an opening (9) in the box and that the side wall (12) is provided with at least one connection (13, 14, 15) to which an electrical installation tube of flex type can be connected, wherein the side wall (12), at least within a limited area, is formed with a double wall (20, 80) having an outer wall part (21, 85) and an inner wall part (22, 86), the outer wall part (21, 85) being provided with a first circular connecting hole (21 H, 85H) having a greater diameter than a second circular connecting hole (22H, 86H) placed inside the first circular connecting hole (21 H, 85H), the connecting holes (21 H, 22H) being arranged so that a first flex tube can be introduced through the first circular connecting hole and be connected to the second circular connecting hole.

## Description

### Technical Field

The present invention relates to the area of installation material and particularly to installation boxes for the connection of standardized flex tubes of different diameters. Through said flex tubes, electric cables are drawn into the installation boxes. The flex tubes are formed with ridges and intermediate valleys to easily be possible to be bent.

### Background of the Invention

By EP 1322011, an installation box for electrical installations is previously known, to which installation box flex tubes are connected to a connecting sleeve for said flex tubes in the box. Each connecting sleeve in the box is adapted to flex tubes of two different diameters, where a flex tube of a greater diameter is connected outermost and a flex tube of a smaller diameter is connected innermost in this connecting sleeve. The connection takes place by each one of two opposite resilient locking tongues being provided with first and second lock edges, which grip around one of the ridges of the flex tube. By the fact that said locking tongues have a limited width, it means that the grip around the respective ridge of the flex tube takes place along a relatively short distance in relation to the circumference of the flex tube. This leads in turn to the connection to the installation box becoming inferior and may easier result in the flex tube coming loose from the box. In addition, said resilient locking tongues entail that a gap has to be present between locking tongues and the wall of the connecting sleeve which decreases the tightness of the installation box.

By EP 2549603, a separate connecting sleeve is connected to an installation box, which connecting sleeve allows connection of flex tubes of three different diameters. This connecting sleeve has to be connected separately and will require a large space outside the box. Thus, the installation is time-consuming at the same time as the device requires large spaces outside the box.

### The Object of the Invention

The present invention aims at providing an improved installation box that allows connection of flex tubes of two different diameters and which are not impaired by the disadvantages described above of existing installation boxes.

Another object of the present invention is to, by means of such an improved installation box, increase the tightness against the surroundings in relation to existing installation boxes.

### Summary of the Invention

By the present invention, such as the same is defined in the independent claim, the above-mentioned objects are met. Suitable embodiments of the invention are defined in the dependent claims.

The invention concerns an installation box for the installation of electrical cables. The box is provided with a bottom and at least one side wall which is connected to the bottom and extends up toward an opening in the box. The side wall is provided with at least one connection to which an electrical installation tube of flex type can be connected. The side wall is, at least within a limited area, double-walled with an outer wall part and an inner wall part. The outer wall part is provided with a first circular connecting hole having a greater diameter than a second circular connecting hole placed inside the first circular connecting hole. The connecting holes are arranged in relation to each other so that a first flex tube can be introduced through the first circular connecting hole and be connected to the second circular connecting hole. Preferably, the connecting holes are concentrically arranged to each other but may alternatively be placed offset each other as long as connection of a flex tube can be made to the inner connecting hole.

In one embodiment according to the invention, both the outer wall part and the inner wall part in the limited area are flat.

In one embodiment according to the invention, the perpendicular distance between the outer wall part and the inner wall part is equal to or slightly greater than the width of a wave crest of a connected second flex tube having a greater diameter than the diameter of said first flex tube.

In one embodiment according to the invention, the first circular connecting hole and/or the second circular connecting hole are/is provided with a chamfer on the outer, outwardly turning edge of the respective hole.

In one embodiment according to the invention, the second circular connecting hole is covered by a seal. This seal may be of rubber or a similar material, which has been cast into the box at the same time as the injection moulding thereof.

In further embodiments of the seal, this is formed to seal the space between the outer wall part and the inner wall part. For instance, a membrane seal covering the inner connecting hole may in addition be provided with a sealing lip, which seals the space between the outer wall part and the inner wall part. The function of the seal is to obtain a tight installation box also when one or more flex tubes are connected to the box.

In one embodiment according to the invention, said bottom of the installation box is rectangular, preferably quadratic. The box is provided with four flat side walls connected to said bottom at least two side walls of which each is provided with a double wall having an outer wall part and an inner wall part.

In one embodiment according to the invention, at least one double wall is provided with two groups of a first circular connecting hole arranged outside a second circular connecting hole. Such a group of double connecting holes is referred to as a connection.

In one embodiment according to the invention, said double wall is formed as a separate tube connection arranged to be connected to a side wall. The separate tube connection is provided with runners running in tracks, which makes that the tube connection can be connected to the box by being displaced into said tracks and being fixed in the box by means of snap action. Such a separate tube connection constitutes an accessory for an installation box for the connection of flex tubes of two different diameters.

In one embodiment according to the invention, said opening in the box is circular and provided with a mounting device for an electric insert.

In one embodiment according to the invention, the first circular connecting hole and/or the second circular connecting hole are/is provided with a seal arranged adjacent to the respective connecting hole for sealing between the respective flex tube and the installation box.

### Brief Description of the Drawings

The invention will now be described in more detail by means of embodiment examples, reference being made to the accompanying drawings, wherein
- Figure 1: shows a perspective view of an installation box according to a first embodiment of the invention,
- Figure 2: shows a partial enlargement according to Figure 1,
- Figure 3: shows an installation box according to Figure 1 in a side view,
- Figure 4: shows a section A-A according to Figure 3,
- Figure 5: shows an enlargement according to Figure 4,
- Figure 6: shows a similar section as in Figure 4 through a box having connected flex tubes of two different diameters according to the invention,
- Figure 7: shows an installation box in a side view according to a second embodiment of the invention,
- Figure 8: shows a section B-B according to Figure 7,
- Figure 9: shows a similar section as in Figure 8 through a box having connected flex tubes of two different diameters according to the invention.

### Description of the Invention

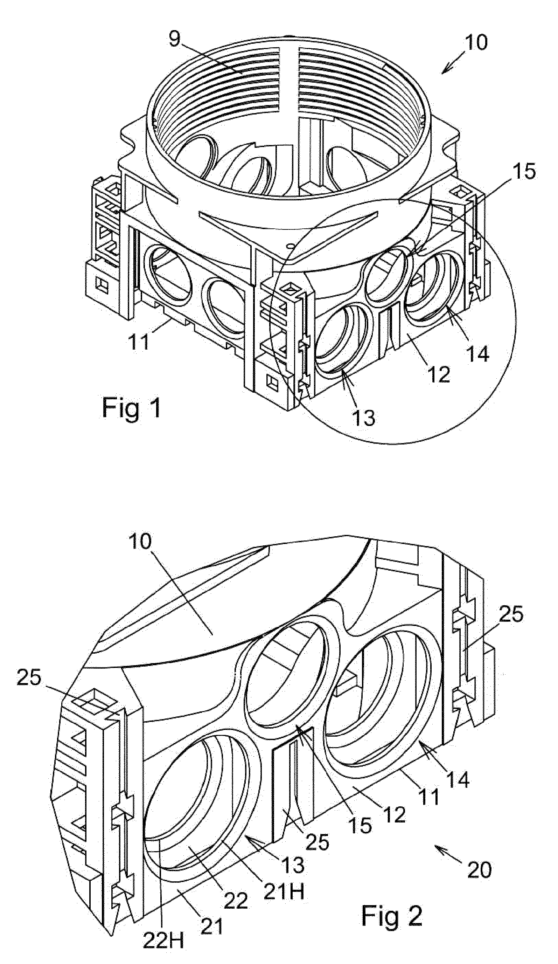

Figure 1 shows a perspective view of a first embodiment of an installation box 10 having a bottom 11 and a side wall 12, which extends from the bottom up toward a cylindrically shaped opening 9 in which electric inserts can be connected to the installation box by a connection device, not shown. The embodiment shown is provided with four side walls arranged perpendicular to the bottom of the installation box and having a right angle between each other. At least one side wall 12 is formed with connections 13, 14, 15 to which, either via an adapter or directly to the respective hole, a so-called flex tube can be connected for the cabling to the installation box. Such flex tubes are formed with cylindrical ridges and intermediate valleys and are manufactured in a number of different diameters that is measured across the cylindrical ridges, for instance Ø₁ 16 mm and Ø₂ 20 mm. Said flex tubes are easier to bend than conventional smooth cabling tubes and therefore they are increasingly used for electrical installations in dwelling and office buildings.

Figure 2 shows an enlargement of a part of the marked part of the installation box according to Figure 1. The figure shows a side wall 12 which for the connection 13 and the connection 14 is formed with a double wall 20. The connection 13 is hereupon provided with an outer wall part 21 and an inner wall part 22, which two wall parts are provided with circular connecting holes 21 H, 22H, the first connecting hole 21 H of which is situated in the outer wall part 21 and the second connecting hole 22H is situated in the inner wall part 22. The first connecting hole 21 H in the outer wall part has a greater diameter than the second connecting hole 22H in the inner wall part. Hereupon, a flex tube having a smaller diameter, for instance Ø₁=16 mm, can be introduced through the first connecting hole 21 H and be attached to the second connecting hole 22H in the inner wall part 22. However, a flex tube having a greater diameter, for instance Ø₂=20 mm, can only be introduced into and be attached to the first connecting hole 21 H in the outer wall part 21. The embodiment according to the figure is provided with a similar second connection 14, which comprises said connecting holes in said wall parts. The two connections 13, 14 are placed side by side at the same distance from the bottom 11 of the installation box 10. The installation box is in addition provided with a single-walled connection 15 having a connecting hole placed symmetrically in relation to the two double-walled connections 13, 14 but at a greater distance from the bottom 11 of the box. The embodiment is in addition provided with coupling means 25 of female type intended to co-operate with the corresponding coupling means of male type of a similar installation box so as to be possible to be coupled together by pushing one box into the other.

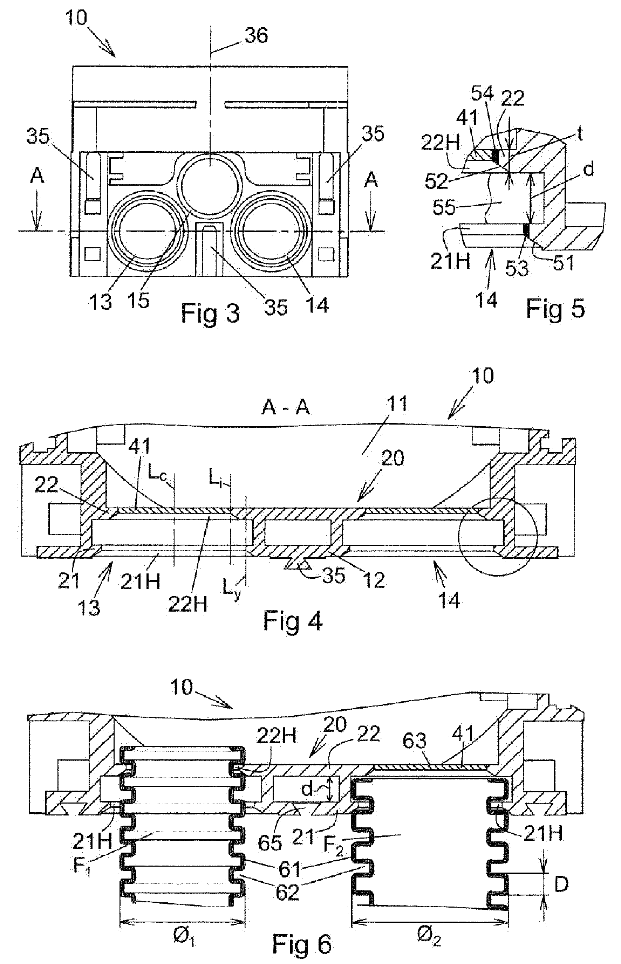

Figure 3 shows a side view of an installation box 10 according to Figures 1 and 2 but from opposite side that is provided with coupling means 35 of male type which accordingly can be coupled together with a similar box as in Figure 2 via the coupling means 25 thereof. The connections 13, 14, 15 of the installation box are placed symmetrically in relation to the centre line 36 of the box.

Figure 4 shows a section A-A according to Figure 3 through a part of the installation box 10. The figure shows the formed double wall 20 in the side wall 12 with the connection 13 and the connection 14. The side wall 12 is connected perpendicular to the bottom 11 of the installation box. The first connecting hole 21 H in the outer wall part 21 has a greater diameter than the second connecting hole 22H in the inner wall part 22. Preferably, the connecting holes are concentrically arranged but may alternatively be placed offset each other as long as a point of the limiting edge of the second, inner, connecting hole 22H according to line Lᵢ is located closer to the centre line L_{c} of the first, outer, connecting hole 21 H than a point on the limiting edge of the edge line L_{y} of this hole or that said point on the line L_{y} is located on the line Lᵢ.

The second connecting hole 22H in the inner wall part 22 is covered by a penetrable membrane 41. The membrane is provided with indications of fracture so that it easily should give way along a suitable rupture line. Principally, the indications of fracture are of two kinds, one type is a central notch to allow penetration of electric cables from a flex tube fastened in the first, outer, connecting hole 21 H. The other type is an indication of fracture along the periphery of the second, inner, connecting hole 22H to be broken and seal against a flex tube introduced in said hole. The second connection 14 in the figure is formed similarly as the first connection 13. The figure also shows the dovetail-shaped coupling means 35 of male type.

Figure 5 shows a detail from the second connection 14 according to the marked part from Figure 4 in enlargement. The edge of the outer connecting hole 21 H of the connection is provided with an outer chamfer 51, which facilitates the insertion of the flex tube having the greater diameter Ø₂. Also the edge of the second, inner, connecting hole 22H of the connection 14 is provided with an inner chamfer 52 having the corresponding function, i.e., to facilitate the insertion of the flex tube having the smaller diameter Ø₁. The figure also shows a part of the membrane 41, which is connected to the edge of the periphery of the second, inner, connecting hole 22H.

Within the scope of the invention, the first outer connecting hole 21 H or the periphery thereof or the second connecting hole 22H or the periphery thereof may also be provided with some form of sealing element 53, 54, for instance, a rubber covering on the edge of the hole.

Between the first outer connecting hole 21 H and the second, inner, connecting hole 22H, i.e., between the inner wall part and the outer wall part, there is a distance d corresponding to the width of the ridges of the flex tube having the greater diameter Ø₂. The wall thickness t of the inner wall part 22 corresponds to the width of the valleys of the flex tube having the smaller diameter Ø₁ or somewhat smaller to provide good tightness between flex tube and connecting hole.

The space between the outer wall part 21 and the inner wall part 22 is in embodiments of the invention provided with a sealing lip 55, which seals the space as well as gaps between an installed flex tube and the installation box.

Figure 6 shows a similar section through a second side of the installation box 10 having two connected flex tubes F₁ and F₂ of two different diameters Ø₁ and Ø₂ wherein Ø₁< Ø₂. Both these flex tubes are formed with wave crests 61 and intermediate valleys 62.

The first flex tube F₁ is introduced through the first, outer, connecting hole 21 H and further through the second, inner, connecting hole 22H. Hereupon, the covering membrane of the inner connecting hole has been penetrated by the introduced flex tube, which connects in one of the valleys of the flex tube with the edge of the connecting hole 21 H. The tightness of the installation box depends on the abutment between the flex tube and this edge and preferably there are left-overs of the membrane on the edge of the hole so as to obtain the intended tightness between the hole and the flex tube. Alternatively, the edge of the hole is formed as a seal, which co-operates with one of the valleys 62 of the flex tube.

The second flex tube F₂ is introduced through solely the first, outer, connecting hole 21 H the edge of which engages a valley 62 of the flex tube F₂. The wave crest of the flex tube that is situated inside the connecting hole 21 H has a width D corresponding to the distance d between the inner wall part 22 and the outer wall part 21. Correspondingly as for the inner hole, the edge of the outer hole is alternatively formed as a seal, which co-operates with one of the valleys 62 of the flex tube. Alternatively, the inner wall part in the area of the end of the flex tube F₂ may be provided with a seal, which seals against just the end of the flex tube F₂. As is seen in the figure, in this installation of the thicker flex tube F₂, the membrane 41 will be unaffected by the tube, but will be penetrated upon drawing-through of electric cables. Then, the membrane 41 will constitute a seal between the electric cables and the installation box 10. The membrane is preferably formed with a centre notch 63 in order to get a controlled penetration. This section view also shows a complementary dovetail-shaped coupling means 65 of female type.

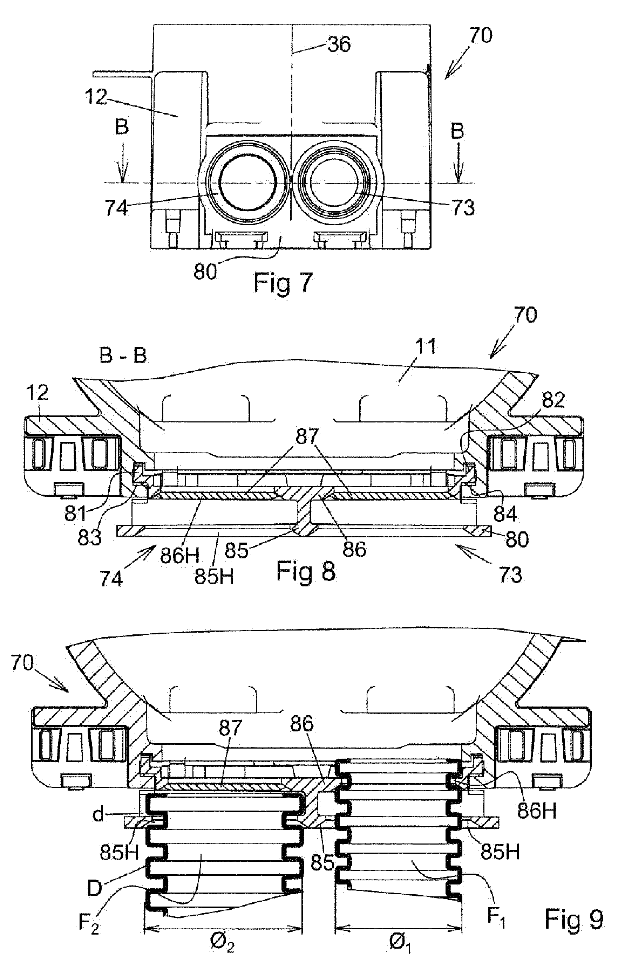

Figure 7 shows an installation box for the installation of electrical cables according to a second embodiment of the invention. The figure shows a side view of an installation box 70 that on a side wall 12 is provided with a connected double wall 80 formed as a separate tube connection, for instance for the two connections 73, 74. In the embodiment of the box illustrated, these connections 73, 74 are also placed symmetrically in relation to the centre line 36 of the installation box.

Figure 8 shows a section B-B according to Figure 7 through the installation box 70 with the connected double wall 80. The double wall 80 is provided with sliding means 81, 82 for displacement in tracks 83, 84 in the box. The double wall 80 is connected to the box by being pressed into said tracks 83, 84 and is fixed by means of snap-in means, not shown, in the pressed-in location thereof.

The double wall 80 is provided with the connection 73 and connection 74 which, in the outer wall part 85, have a greater diameter and, in the inner wall part 86, have a smaller diameter. Correspondingly as has been described in the first embodiment, the side wall 12 is connected perpendicular to the bottom 11 of the installation box. A first connecting hole 85H in the outer wall part 85 has a greater diameter than a second connecting hole 86H in the inner wall part 86. Preferably, the connecting holes are concentrically arranged but may alternatively be placed offset each other as long as a point on the limiting edge of the second, inner, connecting hole 86H is located closer to the centre line of the first, outer, connecting hole 85H than a point on the limiting edge of the edge line of this hole entirely according to what has been described under Figure 4.

The second connecting hole 86H in the inner wall part 86 is covered by a penetrable membrane 87. The membrane is provided with indications of fracture so that it easily should give way along a suitable rupture line. Principally, the indications of fracture are of two kinds, one type is a central notch to allow penetration of electric cables from a flex tube fastened in the first, outer, connecting hole 85H. The other type is an indication of fracture along the periphery of the second, inner, connecting hole 86H to be broken and seal against a flex tube introduced in said hole. The second connection 74 in the figure is formed similarly as the first connection 73.

Figure 9 shows the same section as in Figure 8 but having two connected flex tubes F₁ and F₂ of two different diameters Ø₁ and Ø₂ wherein Ø₁< Ø₂. Both these flex tubes are formed with wave crests and intermediate wave troughs in the same way as has been shown and described under Figure 6.

The first flex tube F₁ is introduced through the first, outer, connecting hole 85H in the outer wall part 85 and further through the second, inner, connecting hole 86H in the inner wall part 86. Hereupon, the covering membrane 87 of the inner connecting hole has been penetrated by the introduced flex tube, which connects in one of the valleys of the flex tube with the edge of the connecting hole 86H. The tightness of the installation box depends on the abutment between the flex tube and this edge and preferably there are left-overs of the membrane 87 on the edge of the hole so as to obtain the intended tightness between the hole and the flex tube. Alternatively, the edge of the hole is formed as a seal, which co-operates with one of the wave troughs of the flex tube.

The second flex tube F₂ is introduced through solely the first, outer, connecting hole 85H the edge of which engages a wave trough of the flex tube F₂. The wave crest of the flex tube that is situated inside the connecting hole 85H has a width D corresponding to the distance d between the inner wall part 86 and the outer wall part 85. Correspondingly as for the inner hole, the edge of the outer hole 85H is alternatively formed as a seal, which co-operates with one of the wave troughs of the flex tube. Alternatively, the inner wall part 86 in the area of the end of the flex tube F₂ may be provided with a seal, which seals against just the end of the flex tube F₂. As is seen in the figure, in this installation of the thicker flex tube F₂, the membrane 87 will be unaffected by the tube, but will be penetrated upon drawing-through of electric cables. The membrane 87 will then constitute a seal between the electric cables and the installation box 70. The membrane is preferably formed according to what has previously been described, i.e., with a centre notch in order to get a controlled penetration.

Correspondingly as has been described for the first embodiment, one and or the other connecting hole may be provided with a chamfer on the outer edge of the respective hole.

## Claims

1. Installation box (10) for the installation of electrical cables, which box (10) is provided with a bottom (11) and at least one side wall (12) which is connected to the bottom and extends up toward an opening (9) in the box and that the side wall (12) is provided with at least one connection (13, 14, 15) to which an electrical installation tube of flex type can be connected, **characterized in that** the side wall (12), at least within a limited area, is formed with a double wall (20, 80) having an outer wall part (21, 85) and an inner wall part (22, 86), the outer wall part (21, 85) being provided with a first circular connecting hole (21 H, 85H) having a greater diameter than a second circular connecting hole (22H, 86H) placed inside the first circular connecting hole (21 H, 85H), the connecting holes (21 H, 22H, 85H, 86H) being arranged in relation to each other so that a first flex tube can be introduced through the first circular connecting hole and be connected to the second circular connecting hole.

2. Installation box according to claim 1, **characterized in that** both the outer wall part (21, 85) and the inner wall part (22, 86) in the limited area are flat.

3. Installation box according to any one of claims 1-2, **characterized in that** the perpendicular distance (d) between the outer wall part (21, 85) and the inner wall part (22, 86) is equal to or slightly greater than the width (D) of a wave crest of a connected second flex tube (F₂) having a greater diameter (Ø₂) than the diameter (Ø₁) of said first flex tube (F₁).

4. Installation box according to any one of claims 1-3, **characterized in that** the first circular connecting hole (21 H, 85H) and/or the second circular connecting hole (22H, 86H) are/is provided with a chamfer (51, 52) on the outer edge of the respective hole.

5. Installation box according to any one of claims 1-4, **characterized in that** the second circular connecting hole (22H, 86H) is covered by a seal (41, 87).

6. Installation box according to any one of claims 1-5, **characterized in that** said bottom (11) of the installation box is rectangular, preferably quadratic, and that four flat side walls (12) are connected to said bottom (11) and at least two side walls of which each is provided with a double wall (20, 80) having an outer wall part (21, 85) and an inner wall part (22, 86).

7. Installation box according to any one of claims 1-6, **characterized in that** at least one double wall (20, 80) is provided with two groups of a first circular connecting hole (21 H, 85H) outside a second circular connecting hole (22H, 86H).

8. Installation box according to any one of claims 1-7, **characterized in that** said double wall (20, 80) is formed as a separate tube connection (80) arranged to be connected to a side wall (12).

9. Installation box according to any one of claims 1-8, **characterized in that** said opening (9) in the box is circular and provided with a mounting device for an electric insert.

10. Installation box according to any one of claims 1-9, **characterized in that** the first circular connecting hole (21 H, 85H) and/or the second circular connecting hole (22H, 86H) are/is provided with seal (53, 54) arranged adjacent to the respective connecting hole for sealing between the respective flex tube and the double wall (20, 80) of the installation box.

11. Installation box according to any one of claims 1-10, **characterized in that** a sealing lip (55) is arranged between the outer wall part (21) and the inner wall part (22).
